# EUROPÄISCHE PATENTSCHRIFT

(11) **EP 1 907 248 B1**
(45) Veröffentlichungstag und Bekanntmachung des Hinweises auf die Patenterteilung: **10.03.2010**
(21) Anmeldenummer: 06776309.4
(22) Anmeldetag: 20.07.2006
(51) Int. Cl.: B60S 9/08, B66C 23/78, B66C 23/90, B66F 3/08

(54) **STÜTZWINDE MIT STÜTZLASTINDIKATOR**
SUPPORT JACK WITH SUPPORTING LOAD INDICATOR
VERIN D'APPUI A INDICATEUR DE CHARGE D'APPUI

(30) Priorität: 27.07.2005 DE 102005036139
(43) Veröffentlichungstag der Anmeldung: 09.04.2008
(73) Patentinhaber: Jost-Werke GmbH, 63263 Neu-Isenburg (DE)
(72) Erfinder: ALGÜERA, José Manuel, 63739 Aschaffenburg (DE); SAUPE, Swen, 55122 Mainz (DE)
(74) Vertreter: Fuchs
(86) Internationale Anmeldenummer: PCT/EP2006/007142
(87) Internationale Veröffentlichungsnummer: WO 2007/012423

(56) Entgegenhaltungen:
- EP-A- 1 026 057
- WO-A2-2005/003014
- FR-A- 2 491 048
- US-A- 3 523 698
- US-A- 4 097 840
- US-A- 4 572 527
- US-A- 5 143 386
- US-A1- 2003 122 347

## Beschreibung

Die Erfindung betrifft eine Stützwinde gemäß dem Oberbegriff des Patentanspruchs 1.

Derartige Stützwinden sind häufig an Sattelaufliegem oder allgemein Anhängern angebracht und stützen diese insbesondere in einem nicht angekuppelten Zustand ab. Die Stützwinden werden aus Vierkantrohren hergestellt, die ineinander gesteckt und gegeneinander verfahren werden können, wie beispielsweise aus der EP 1 104 369 B1 bekannt ist.

Darüber hinaus kommen Stützwinden bei Silofahrzeugen zum Einsatz, bei denen ein Silobehälter bei stehendem Fahrzeug zum Entleeren aus einer liegenden in eine nahezu senkrechte Position aufgestellt wird. In dieser aufgestellten Position ist das Fahrzeug ausgesprochen kippempfindlich, so dass es notwendig ist, das Fahrzeugheck vorzugsweise mit beidseitig angeordneten Stützwinden abzustützen. Während des Ausfahrens der Stützwinden muss der Bediener auf einen möglicht ebenen Untergrund mit ausreichender Tragfestigkeit achten und gegebenenfalls den Boden im Bereich der Stützwinde geeignet unterbauen, damit das Fahrzeug sicher steht und nicht umkippen kann.

Zuweilen kann es sogar vorkommen, dass der Bediener versehentlich nur eine der beiden Stützwinden ausfährt.

Die.US 3,523,698 beschreibt ein Niveauausgleichssystem für abgestellte Anhänger umfassend vier an jeder Ecke des Anhängers angeordnete und motorisch ausfahrbare Stützen, die elektrisch an eine am Anhängerchassis befindliche Kontrolleinheit angeschlossen sind, in welcher eine Signalverarbeitung stattfindet. Mit Hilfe des Niveauausgleichssystems soll der abgestellte Anhänger unabhängig von der Neigung des Untergrunds in eine horizontale Lage bringbar sein. Der wesentliche Nachteil dieses bekannten Systems liegt darin, dass der jeweilige Stützwindenmotor über einen Schalter allein wegabhängig gesteuert ist und demzufolge nicht auf eine Stützkraft einstellbar ist.

Ob die Stützwinden auf dem Untergrund ein ausreichendes Widerlager finden, ist für den Bediener kaum zu erkennen. Im Extremfall sinkt die Stützwinde unter der Belastung des Fahrzeuges in den Untergrund ein. Das Fahrzeug ist dann nicht mehr ausreichend abgestützt und kippt mitunter um.

Aus diesem Grund liegt der Erfindung die Aufgabe zugrunde, eine Stützwinde derart weiterzubilden, dass für den Bediener bereits beim Ausfahren des Abstützelementes ein sicherer Stand erkennbar ist.

Die Aufgabe wird erfindungsgemäß mit einer Stützwinde gelöst, bei der an dem Abstützelement ein Stützlastindikator mit einem Druckelement angeordnet ist, wobei das Druckelement bei Erreichen einer vorgebbaren Stützkraft ein Signal auslöst und ein Federelement sowie ein damit zusammenwirkendes Schaltelement umfasst, und bei der das Federelement zwischen der Lagerplatte und dem Lagerring angeordnet ist.

Der Vorteil der Erfindung liegt darin, dass der Bediener solange die Stützwinde ausfährt, bis die Stützwinde eine vorgegebene Stützlast
aufnimmt. Bei einem weichen Untergrund kann es vorkommen, dass die Stützwinde mit ihrem Stützfuß sehr weit in den Untergrund einsinkt, bis das Signal nach Erreichen einer vorgebbaren Stützlast erscheint. Mitunter kann es auch passieren, dass die Stützwinde überhaupt keine Stützkraft in den Boden einleitet und deshalb gar keine Signalgebung erfolgt. In diesen Fällen weiß der Bediener, dass unter der Stützwinde unterbaut werden oder eine andere Standposition aufgesucht werden muss.

Über die geometrischen und/oder materialimmanenten Eigenschaften des Federelementes kann die Größe der vorgegebenen Stützkraft konstruktiv beeinflusst werden. Bei einem Überschreiten dieser Mindeststützkraft kommt es dann zu
einer reversiblen Verformung des Federelementes, wodurch das Schaltelement betätigt wird.

Die bekannten Stützwinden weisen eine in der Außenhülse ortsfest angeordnete Lagerplatte auf, in welcher in axialer Richtung gegenüber der Lagerplatte beweglich eine Spindel gehalten ist, wobei die Spindel einen Lagerring aufweist, welcher sich bei Einleiten einer Stützkraft an der Lagerplatte abstützt. Bei dieser Ausführungsform ist das Federelement zwischen der Lagerplatte und dem Lagerring angeordnet. Die Spindel ist in einem in axialer Richtung ortsfest an der Spindel befestigten Lagerring gelagert. Bei Lastaufnahme weist die Spindel üblicherweise ein vertikales Spiel von 1,5 mm bis 2,0 mm gegenüber der ortsfest in der Außenhülse angeordneten Lagerplatte auf. Dieses Spiel wird nach oben dadurch begrenzt, dass der Lagerring bei Aufnahme der Stützlast mit seiner Oberseite zur Auflage an der Unterseite der Lagerplatte kommt.

In den sich bei Lastaufnahme schließenden Freiraum zwischen Lagerring und Lagerplatte ist das Federelement eingesetzt. Die Krafteinleitung in das Federelement erfolgt dann über den Lagerring der Spindel, wobei das Federelement an der Lagerplatte ein Auflager findet.

Das Federelement kann beispielsweise als Tellerfeder ausgebildet sein. Diese sind als Normteile günstig zu beschaffen und können zum Beispiel für eine Lastaufnahme von 1 t bis 2 t ausgelegt sein. Anstelle einer Tellerfeder wäre beispielsweise auch die Verwendung einer Blattfeder denkbar.

Günstigerweise ist das Schaltelement in der Lagerplatte angeordnet. An dieser Position befindet sich das Schaltelement besonders günstig im Wirkungsbereich des Federelementes. Alternativ könnte das Schaltelement auch in der Wandung der Außenhülse positioniert sein.

Vorzugsweise ist das Schaltelement ein mechanischer Taster. Dieser kann dann durch das Federelement aus einer offenen in eine geschlossene Schaltstellung gebracht werden. Dadurch wird in der offenen Schaltstellung und auch zum Durchführen des Umschaltvorganges keine Energie benötigt. Alternativ zu dieser Ausführungsform können auch berührungslos, elektromagnetisch und kapazitiv arbeitende Sensoren als Schaltelement verwendet werden. Gegebenenfalls wäre das Federelement hinsichtlich seines Werkstoffes entsprechend anzupassen oder beispielsweise mit Permanentmagneten zu bestücken.

Vorteilhafterweise ist der Stützlastindikator an eine erste Anzeigevorrichtung angeschlossen. Die Anzeigevorrichtung ist in beziehungsweise außen an der Stützwinde derart angeordnet, dass sie während des Ausfahrens des Abstützelementes im Blickfeld des Bedieners liegt.

Eine besonders günstige Position für die Anzeigevorrichtung stellt der Gehäusedeckel des Abstützelementes dar, da dieser im Schadensfall einfach modulartig ausgetauscht werden kann.

Wenn die Stützwinde an ein Fahrzeug angebracht ist, kann das Abstützelement in einer besonderen Ausführungsform der Erfindung einen Neigungsindikator mit einem Neigungssensor umfassen, der bei Erreichen einer vorgebbaren im Wesentlichen horizontalen Ausrichtung des Fahrzeuges quer zu seiner Fahrtrichtung ein Signal auslöst. Hierdurch kann der Bediener besonders präzise auch bei schlechten Sichtverhältnissen erkennen, ob das Fahrzeug horizontal ausgerichtet ist.

Sowohl der Neigungsindikator als auch der Stützlastindikator können mit einer Auswerteeinheit verbunden sein. In der Auswerteeinheit können die Messwerte über einen längeren Zeitraum gespeichert werden, wodurch nach dem Umkippen eines Fahrzeuges festgestellt werden kann, ob die Stützwinden auf einem tragfähigen Untergrund aufgestellt waren und das Fahrzeug schon vor dem Aufstellen des Silobehälters mit seitlicher Neigung gestanden hat. Darüber hinaus kann in der Auswerteeinheit ein vorgebbarer Soll-Wert hinterlegt werden, der beispielsweise eine seitliche Neigung des Fahrzeuges von +/- 4° zulässt und erst bei höheren Werten auf ein Freigabesignal schaltet.

Es kann auch vorgesehen sein, dass die Auswerteeinheit ein Steuersignal ausgibt, welches auf eine Fahrzeugsteuerung derart einwirkt, dass ein Kippen eines Behälters gesperrt oder freigegeben ist. Damit wäre eine Fehlbedienung des Bedieners noch weiter ausgeschlossen.

Vorteilhafterweise ist der Stützlastindikator und der Neigungsindikator aus einem gemeinsamen Energiespeicher versorgt, welcher ebenfalls in dem Abstützelement, vorzugsweise in dem Gehäusedeckel, angeordnet sein kann.

Günstigerweise ist der Neigungsindikator an die erste Anzeigevorrichtung und/oder an eine zweite Anzeigevorrichtung angeschlossen, wobei die zweite Anzeigevorrichtung ebenfalls an dem Abstützelement angeordnet sein sollte.

Die Signalwirkung lässt sich effektiv dadurch realisieren, dass die erste und/oder zweite Anzeigevorrichtung ein optisches und/oder mechanisches und/oder akustisches Anzeigeelement aufweist.

Eine besonders kompakte Bauform lässt sich erreichen, wenn eine der Anzeigevorrichtungen, der Energiespeicher und möglicherweise auch noch die Auswerteeinheit in den Gehäusedeckel integriert sind. Zum Schutz vor Feuchtigkeit und Beschädigungen könnten alle Bauteile in den Gehäusedeckel eingegossen sein.

Zum besseren Verständnis wird die Erfindung nachfolgend anhand von 4 Zeichnungsfiguren erläutert. Dabei zeigt die
- **Fig. 1:**: einen Querschnitt durch eine Stützwinde mit Stützlastindikator ohne Lastaufnahme;
- **Fig. 2:**: einen Querschnitt durch eine Stützwinde mit Stützlastindikator nach Überschreiten der vorgegebenen Mindeststützlast;
- **Fig. 3:**: eine Hinteransicht auf ein schräg stehendes Fahrzeug mit ausgefahrenen Stützwinden und
- **Fig. 4:**: eine Hinteransicht auf ein horizontal ausgerichtetes Fahrzeug mit ausgefahrenen Stützwinden;

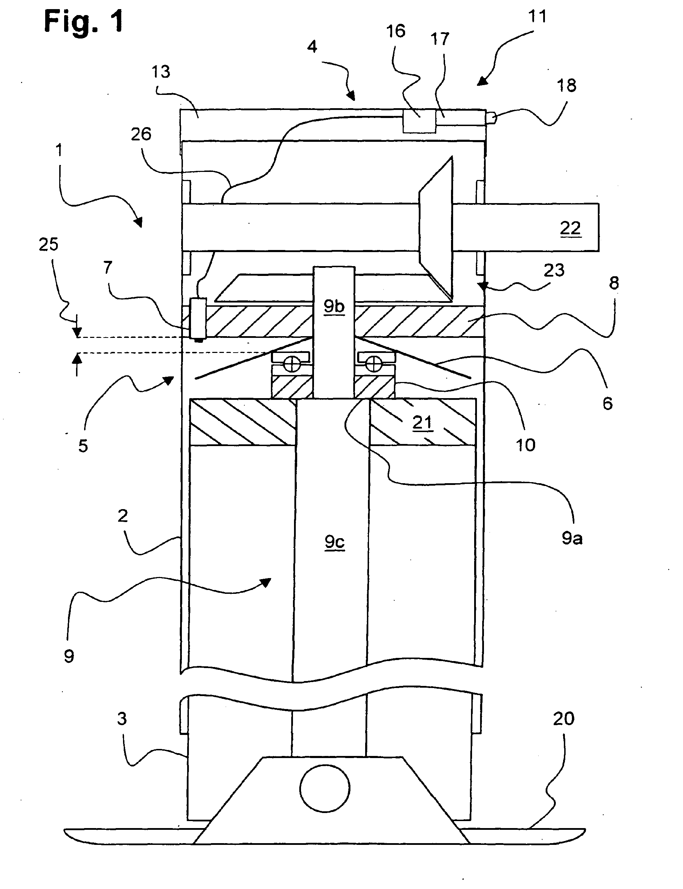

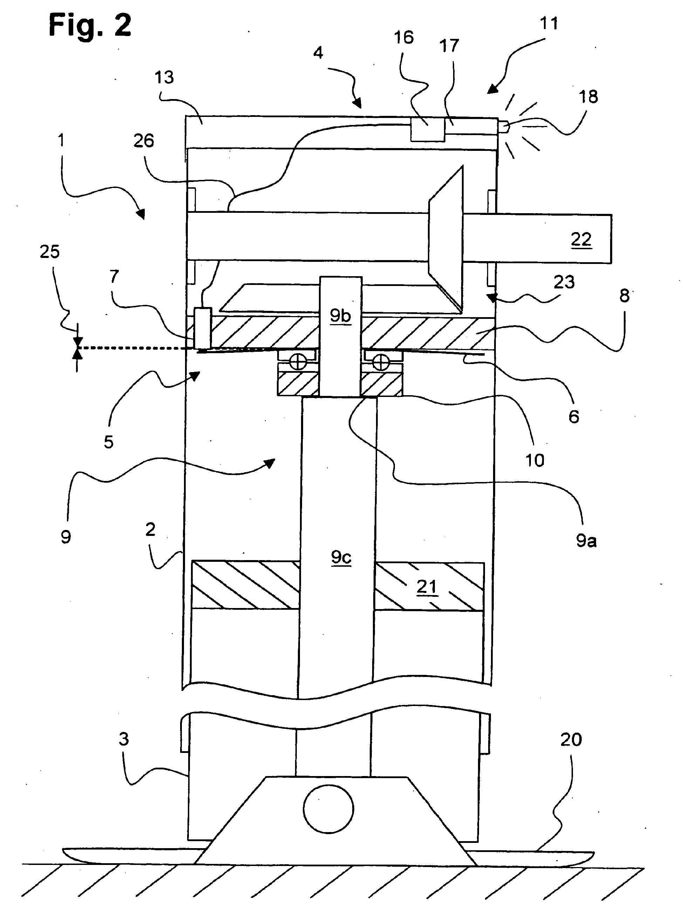

Die Figur 1 zeigt in einem Querschnitt ein Abstützelement 1 einer Stützwinde mit einem Stützlastindikator 4 umfassend eine Außenhülse 2 und eine darin verfahrbar geführte Innenhülse 3. Am unteren Ende der Innenhülse 3 befindet sich ein Stützfuß 20, der in ausgefahrenen Zustand des Abstützelementes 1 zur Auflage auf dem Boden kommt (siehe Figur 2).

Das Aus- und Einfahren der Innenhülse 3 erfolgt durch Drehen der Eingangswelle 22, die in die Außenhülse 2 eingesteckt und in gegenüberliegenden Wandungen gelagert ist. Das Drehmoment der Eingangswelle 22 wird über ein Kegelradgetriebe 23 auf eine Spindel 9 übertragen, die in Abhängigkeit der Drehrichtung eine drehfest in der Außenhülse 2 angeordnete Spindelmutter 21 lateral verfährt. Die Spindelmutter 21 ist in die Innenhülse 3 eingesetzt und bewegt entsprechend ihres Verfahrweges die Innenhülse 3.

Die Spindel 9 weist einen oberen durchmesserkleinen Abschnitt 9b auf, der im Bereich einer Spindelschulter 9a in einen durchmessergroßen Abschnitt 9c übergeht. Der durchmessergroße Abschnitt 9c ist mit einem Gebinde versehen. Auf den durchmesserkleinen Abschnitt 9b ist ein Lagerring 10 drehfest aufgeschoben, welcher mit seiner Unterseite auf der Spindelschulter 9a anliegt und dadurch nach unten auch formschlüssig fixiert ist. In der gezeigten Darstellung der Figur 1 ist die Innenhülse 3 vollständig eingefahren, so dass die Spindelmutter 21 gegen den Lagerring 10 stößt.

Unterhalb des Kegelradgetriebes 23 ist die Außenhülse 2 von einer Lagerplatte 8 durchsetzt, die in einem mittleren Bereich eine Ausnehmung zur Durchführung des durchmesserkleinen Abschnittes 9b der Spindel 9 aufweist. In eingefahrenem Zustand des Abstützelementes 1 ist die Spindel 9 aufgrund des Eigengewichtes der Innenhülse 3 und des Stützfußes 20 auf Zug beansprucht, so dass sich resultierend aus einem Lagerspiel 25 ein Freiraum zwischen dem Lagerring 10 und der Lagerplatte 8 einstellt.

In den aus dem Lagerspiel 25 resultierenden Freiraum ist ein Federelement 6 in Form einer Tellerfeder eingesetzt. Die Tellerfeder ist auf den durchmesserkleinen Abschnitt 9b der Spindel 9 aufgeschoben und weist eine konische Form auf, wobei die Enden in radialer Richtung nach unten geneigt sind.

In die Lagerplatte 8 ist ein Schaltelement 7 eingesetzt. Hierbei handelt es sich um einen mechanischen Taster, der in radialer Richtung von dem Federelement 6 überdeckt ist, jedoch nicht von diesem berührt wird. Das Federelement 6 und das Schaltelement 7 bilden zusammen ein Druckelement 5, welches über eine Verbindungsleitung 26 mit einer ersten Anzeigevorrichtung 11 verbunden ist.

Das Abstützelement 1 ist an seinem oberen Ende mit einem Gehäusedeckel 13 verschlossen. In dem Gehäusedeckel 13 befindet sich die erste Anzeigevorrichtung 11, die neben dem Anzeigeelement 18 einen Energiespeicher 17, beispielsweise eine handelsübliche Batterie, und eine Auswerteeinheit 16 umfasst.

In der Figur 2 ist das Abstützelement 1 mit einer ausgefahrenen Innenhülse 3 dargestellt, wobei der Stützfuß 20 auf den Boden aufgesetzt ist. Die Spindelmutter 21 ist in der Außenhülse 2 nach unten gewandert und hat dabei die Innenhülse 3 ausgeschoben. In dieser Stellung stützt sich die Spindel 9 aufgrund der eingeleiteten Auflast über den Lagerring 10 an der Lagerplatte 8 ab, wodurch kein Lagerspiel 25 mehr vorhanden ist. Der Lagerring 10 erfüllt erst jetzt seine Lagerfunktion, da ein Mitdrehen durch einen Reibschluss mit der Unterseite der Lagerplatte 8 verhindert wird und sich lediglich der drehfest an dem durchmesserkleinen Abschnitt 9b angrenzende Teil des Lagerringes 10 zusammen mit der Spindel 9 dreht.

Die vorgegebene Mindestlast des Federelementes 6 ist in der gezeigten Darstellung der Figur 2 überschritten. Das Federelement 6 wird durch den Lagerring 10 gegen die Lagerplatte 8 gedrückt und ist in radialer Richtung weit gehend parallel zu der Lagerplatte 8 ausgerichtet, so dass das Schaltelement 7 von dem Federelement 6 erfasst wurde und dadurch das Druckelement 5 in eine Signalstellung geschaltet ist. Diese Signalstellung wird über das Anzeigeelement 18 der ersten Anzeigevorrichtung 11 dem Bediener angezeigt.

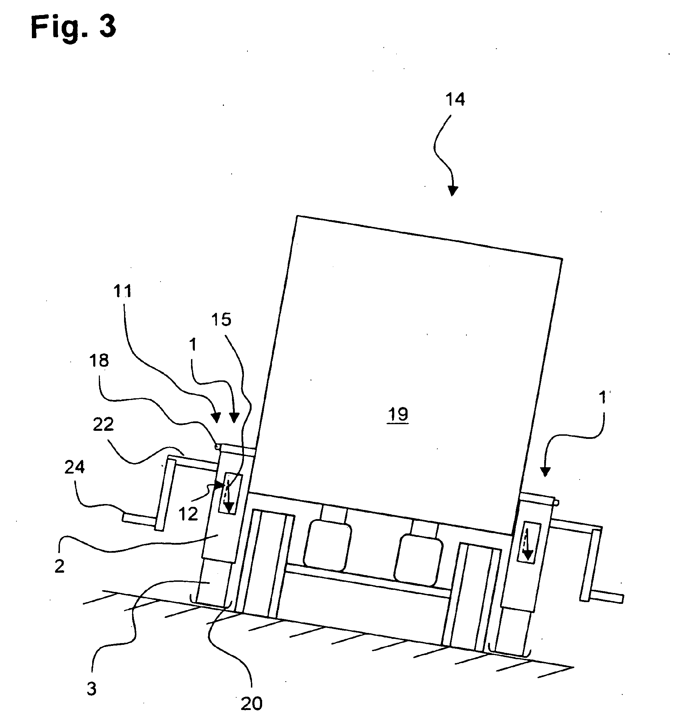

Die Figur 3 zeigt von hinten ein Fahrzeug 14 mit einem darauf befindlichen Silobehälter 19 auf einer zur Fahrzeuglängsachse schiefen Ebene. An beiden Seiten des Fahrzeugs 14 ist seitlich jeweils ein Abstützelement 1 angeordnet. Die Abstützelemente 1 sind weit gehend baugleich ausgeführt und teilweise ausgefahren, ohne dass die Stützfüße 20 in Bodenkontakt stehen. Dementsprechend nimmt das Fahrzeug 19 eine zum Boden parallele Ausrichtung ein.

Die Schrägstellung des Fahrzeuges 19 wird von einem Neigungsindikator 15 erfasst und dem Bediener mittels einer zweiten Anzeigevorrichtung 12 angezeigt, die an der Außenhülse 2 des Abstützelementes 1 angebracht ist.

Durch weiteres Drehen einer Betätigungskurbel 24 wird die Eingangswelle 22 ebenfalls in Drehung versetzt und die Innenhülse 3 weiter ausgefahren, bis das Fahrzeug 19 eine horizontale Lage erreicht hat.

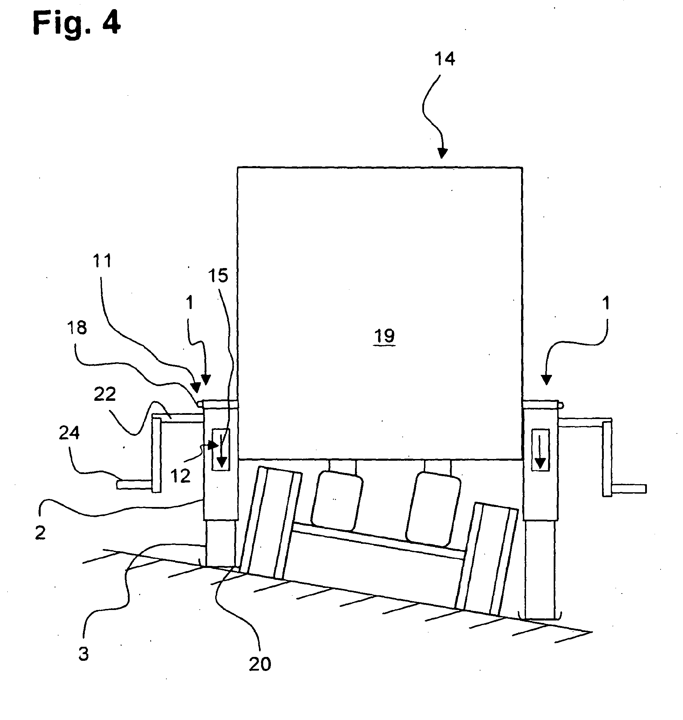

Die horizontale Ausrichtung hat das Fahrzeug in Figur 4 erreicht. Beide Stützfüße 20 der Abstützelemente 1 sind in Kontakt mit dem Boden und mit Last beaufschlagt. Der Bediener erhält über die erste Anzeigevorrichtung 11 die Information der Lastaufnahme des jeweiligen Abstützelementes 1. Die zweite Anzeigevorrichtung 12 informiert über die Seitenneigung des Fahrzeuges 14. Sind beide Anzeigevorrichtungen 11,12 geschaltet, kann mit dem Aufstellen des Silobehälters 19 begonnen werden.

### Bezugszeichenliste

- 1: Abstützelement
- 2: Außenhülse
- 3: Innenhülse
- 4: Stützlastindikator
- 5: Druckelement
- 6: Federelement
- 7: Schaltelement
- 8: Lagerplatte
- 9: Spindel
- 9a: Spindelschulter
- 9b: durchmesserkleiner Abschnitt Spindel
- 9c: durchmessergroßer Abschnitt Spindel
- 10: Lagerring
- 11: erste Anzeigevorrichtung
- 12: zweite Anzeigevorrichtung
- 13: Gehäusedeckel
- 14: Fahrzeug
- 15: Neigungsindikator
- 16: Auswerteeinheit
- 17: Energiespeicher
- 18: Anzeigeelement
- 19: Silobehälter
- 20: Stützfuß
- 21: Spindelmutter
- 22: Eingangswelle
- 23: Kegelradgetriebe
- 24: Betätigungskurbel
- 25: Lagerspiel
- 26: Verbindungsleitung

## Patentansprüche

1. Stützwinde mit einem in ihrer Höhe verfahrbaren, eine Außenhülse (2) und eine Innenhülse (3) aufweisenden Abstützelement (1), wobei in der Außenhülse (2) ortsfest eine Lagerplatte (8) angeordnet ist, in welcher in axialer Richtung gegenüber der Lagerplatte (8) beweglich eine Spindel (9) gehalten ist, wobei die Spindel (9) einen Lagerring (10) aufweist, welcher sich bei Einleiten einer Stützkraft an der Lagerplatte (8) abstützt,
**dadurch gekennzeichnet,**
- **dass** an dem Abstützelement (1) ein Stützlastindikator (4) mit einem Druckelement (5) angeordnet ist, wobei das Druckelement (5) bei Erreichen einer vorgebbaren Stützkraft ein Signal auslöst und ein Federelement (6) sowie ein damit zusammenwirkendes Schaltelement (7) umfasst, und
- **dass** das Federelement (6) zwischen der Lagerplatte (8) und dem Lagerring (10) angeordnet ist.

2. Stützwinde nach Anspruch 1, **dadurch gekennzeichnet, dass** das Federelement (6) als Tellerfeder ausgebildet ist.

3. Stützwinde nach Anspruch 1 oder 2, **dadurch gekennzeichnet, dass** das Schaltelement (7) in der Lagerplatte (8) angeordnet ist.

4. Stützwinde nach einem der Ansprüche 1 bis 3, **dadurch gekennzeichnet, dass** das Schaltelement (7) ein mechanischer Taster ist.

5. Stützwinde nach einem der Ansprüche 1 bis 4, **dadurch gekennzeichnet, dass** der Stützlastindikator (4) an eine erste Anzeigevorrichtung (11) angeschlossen ist.

6. Stützwinde nach Anspruch 5, **dadurch gekennzeichnet, dass** die erste Anzeigevorrichtung (11) in einem Gehäusedeckel (13) des Abstützelementes (1) angeordnet ist.

7. Stützwinde nach einem der Ansprüche 1 bis 6 anbringbar an ein Fahrzeug (14), **dadurch gekennzeichnet, dass** das Abstützelement (1) einen Neigungsindikator (15) mit einem Neigungssensor umfasst, der bei Erreichen einer vorgebbaren im Wesentlichen horizontalen Ausrichtung des Fahrzeuges (14) quer zu seiner Fahrtrichtung ein Signal auslöst.

8. Stützwinde nach einem der Ansprüche 1 bis 7, **dadurch gekennzeichnet, dass** der Neigungsindikator (15) und/oder der Stützlastindikator (4) mit einer Auswerteeinheit (16) verbunden ist.

9. Stützwinde nach Anspruch 8, **dadurch gekennzeichnet, dass** in der Auswerteeinheit (16) ein vorgebbarer Soll-Wert gespeichert ist.

10. Stützwinde nach Anspruch 9, **dadurch gekennzeichnet, dass** die im Wesentlichen horizontale Ausrichtung des Fahrzeugs (14) bei einem vorgebbaren Soll-Wert von +/- 4° erreicht ist.

11. Stützwinde nach einem der Ansprüche 8 bis 10, **dadurch gekennzeichnet, dass** die Auswerteeinheit (16) ein Steuersignal ausgibt, welches auf eine Fahrzeugsteuerung derart einwirkt, dass ein Kippen eines Silobehälters (19) gesperrt oder freigegeben ist.

12. Stützwinde nach einem der Ansprüche 7 bis 11, **dadurch gekennzeichnet, dass** der Stützlastindikator (4) und der Neigungsindikator (15) aus einem gemeinsamen Energiespeicher (17) versorgt ist.

13. Stützwinde nach Anspruch 12, **dadurch gekennzeichnet, dass** der Energiespeicher (17) in dem Abstützelement (1), vorzugsweise in dem Gehäusedeckel (13), angeordnet ist.

14. Stützwinde nach einem der Ansprüche 7 bis 13, **dadurch gekennzeichnet, dass** der Neigungsindikator (15) an die erste Anzeigevorrichtung (11) und/oder an eine zweite Anzeigevorrichtung (12) angeschlossen ist.

15. Stützwinde nach Anspruch 14, **dadurch gekennzeichnet, dass** die zweite Anzeigevorrichtung (12) an dem Abstützelement (1) angeordnet ist.

16. Stützwinde nach einem der Ansprüche 5 bis 15, **dadurch gekennzeichnet, dass** die erste und/oder zweite Anzeigevorrichtung (11, 12) ein optisches und/oder mechanisches und/oder akustisches Anzeigeelement (18) aufweisen.

## Claims

1. Support jack having a support element (1) which is movable in terms of height and which has an outer sleeve (2) and an inner sleeve (3), there being arranged in the outer sleeve (2) so as to be fixed in position a bearing plate (8), in which a spindle (9) is movably retained in an axial direction relative to the bearing plate (8), the spindle (9) having a bearing ring (10) which is supported on the bearing plate (8) when a supporting force is introduced,
**characterised in that**
- a support load indicator (4) having a pressure element (5) is arranged on the support element (1), the pressure element (5) triggering a signal when a predeterminable supporting force is reached and comprising a resilient element (6) and a switch element (7) which co-operates therewith, and **in that**
- the resilient element (6) is arranged between the bearing plate (8) and the bearing ring (10).

2. Support jack according to claim 1, **characterised in that** the resilient element (6) is in the form of a disc spring.

3. Support jack according to claim 1 or claim 2, **characterised in that** the switch element (7) is arranged in the bearing plate (8).

4. Support jack according to any one of claims 1 to 3, **characterised in that** the switch element (7) is a mechanical probe.

5. Support jack according to any one of claims 1 to 4, **characterised in that** the support load indicator (4) is connected to a first display device (11).

6. Support jack according to claim 5, **characterised in that** the first display device (11) is arranged in a housing cover (13) of the support element (1).

7. Support jack according to any one of claims 1 to 6, which can be fitted to a vehicle (14), **characterised in that** the support element (1) comprises an inclination indicator (15) having an inclination sensor which triggers a signal when a predeterminable, substantially horizontal orientation of the vehicle (14) is reached transversely relative to the direction of travel thereof.

8. Support jack according to any one of claims 1 to 7, **characterised in that** the inclination indicator (15) and/or the support load indicator (4) is/are connected to an evaluation unit (16).

9. Support jack according to claim 8, **characterised in that** a predeterminable desired value is stored in the evaluation unit (16).

10. Support jack according to claim 9, **characterised in that** the substantially horizontal orientation of the vehicle (14) is reached at a predeterminable desired value of ±4°.

11. Support jack according to any one of claims 8 to 10, **characterised in that** the evaluation unit (16) outputs a control signal which acts on a vehicle control unit in such a manner that tilting of a silo container (19) is denied or allowed.

12. Support jack according to any one of claims 7 to 11, **characterised in that** the support load indicator (4) and the inclination indicator (15) is supplied from a common energy store (17).

13. Support jack according to claim 12, **characterised in that** the energy store (17) is arranged in the support element (1), preferably in the housing cover (13).

14. Support jack according to any one of claims 7 to 13, **characterised in that** the inclination indicator (15) is connected to the first display device (11) and/or a second display device (12).

15. Support jack according to claim 14, **characterised in that** the second display device (12) is arranged on the support element (1).

16. Support jack according to any one of claims 5 to 15, **characterised in that** the first and/or second display device (11, 12) has/have an optical and/or mechanical and/or acoustic display element (18).

## Revendications

1. Béquille de soutien, avec un élément d'appui (1) mobile en hauteur, présentant un manchon extérieur (2) et un manchon intérieur (3), sachant qu'une plaque de palier (8) est disposée à poste fixe dans le manchon extérieur (2), dans laquelle une broche (9) est maintenue à déplacement en direction axiale par rapport à la plaque de palier (8), sachant que la broche (9) présente une bague de palier (10) qui s'applique contre la plaque de palier (8) lors de l'introduction d'une force d'appui,
**caractérisée en ce qu'**un indicateur de force d'appui (4) pourvu d'un élément de pression (5) est disposé sur l'élément d'appui (1), sachant que l'élément de pression (5) déclenche un signal à l'atteinte d'une force d'appui prescriptible et comprend un élément formant ressort (6) ainsi qu'un élément de commutation (7) coopérant avec celui-ci,
et **en ce que** l'élément formant ressort (6) est disposé entre la plaque de palier (8) et la bague de palier (10).

2. Béquille de soutien selon la revendication 1, **caractérisée en ce que** l'élément formant ressort (6) est réalisé sous forme de rondelle-ressort.

3. Béquille de soutien selon la revendication 1 ou 2, **caractérisée en ce que** l'élément de commutation (7) est disposé dans la plaque de palier (8).

4. Béquille de soutien selon l'une des revendications 1 à 3,
**caractérisée en ce que** l'élément de commutation (7) est un palpeur mécanique.

5. Béquille de soutien selon l'une des revendications 1 à 4,
**caractérisée en ce que** l'indicateur de force d'appui (4) est raccordé à un premier dispositif d'affichage (11).

6. Béquille de soutien selon la revendication 5, **caractérisée en ce que** le premier dispositif d'affichage (11) est disposé dans un couvercle de boîtier (13) de l'élément d'appui (1).

7. Béquille de soutien selon l'une des revendications 1 à 6 pouvant être installée sur un véhicule (14), **caractérisée en ce que** l'élément d'appui (1) comprend un indicateur d'inclinaison (15) pourvu d'un capteur d'inclinaison qui déclenche un signal à l'atteinte d'une orientation prescriptible sensiblement horizontale du véhicule (14) transversalement à sa direction de marche.

8. Béquille de soutien selon l'une des revendications 1 à 7,
**caractérisée en ce que** l'indicateur d'inclinaison (15) et/ou l'indicateur de force d'appui (4) sont reliés à une unité d'interprétation (16).

9. Béquille de soutien selon la revendication 8, **caractérisée en ce qu'**une valeur de consigne prescriptible est mémorisée dans l'unité d'interprétation (16).

10. Béquille de soutien selon la revendication 9, **caractérisée en ce que** l'orientation sensiblement horizontale du véhicule (14) est atteinte pour une valeur de consigne prescriptible de +/- 4°.

11. Béquille de soutien selon l'une des revendications 8 à 10,
**caractérisée en ce que** l'unité d'interprétation (16) délivre un signal de commande qui agit sur une unité de commande du véhicule de manière à empêcher ou autoriser le basculement d'un récipient pour vrac (19).

12. Béquille de soutien selon l'une des revendications 7 à 11,
**caractérisée en ce que** l'indicateur de force d'appui (4) et l'indicateur d'inclinaison (15) sont alimentés à partir d'un accumulateur d'énergie commun (17).

13. Béquille de soutien selon la revendication 12, **caractérisée en ce que** l'accumulateur d'énergie (17) est disposé dans l'élément d'appui (1), de préférence dans le couvercle de boîtier (13).

14. Béquille de soutien selon l'une des revendications 7 à 13,
**caractérisée en ce que** l'indicateur d'inclinaison (15) est raccordé au premier dispositif d'affichage (11) et/ou à un deuxième dispositif d'affichage (12).

15. Béquille de soutien selon la revendication 14, **caractérisée en ce que** le deuxième dispositif d'affichage (12) est disposé sur l'élément d'appui (1).

16. Béquille de soutien selon l'une des revendications 5 à 15,
**caractérisée en ce que** le premier et/ou le deuxième dispositifs d'affichage (11, 12) présentent un élément d'affichage optique et/ou mécanique et/ou acoustique (18).
